# EUROPÄISCHE PATENTSCHRIFT

(11) **EP 2 686 559 B1**
(45) Veröffentlichungstag und Bekanntmachung des Hinweises auf die Patenterteilung: **06.11.2019**
(21) Anmeldenummer: 12708680.9
(22) Anmeldetag: 08.03.2012
(51) Int. Cl.: F04D 25/06, F04D 29/66, A61C 17/06

(54) **SAUGEINHEIT**
SUCTION UNIT
UNITÉ D'ASPIRATION

(30) Priorität: 17.03.2011 DE 102011014359
(43) Veröffentlichungstag der Anmeldung: 22.01.2014
(73) Patentinhaber: Dürr Dental SE, 74321 Bietigheim-Bissingen (DE)
(72) Erfinder: SCHNEPF, Jürgen, 74080 Heilbronn (DE); HÄGELE, Andreas, 71384 Weinstadt (DE)
(74) Vertreter: Ostertag & Partner Patentanwälte mbB
(86) Internationale Anmeldenummer: PCT/EP2012/001024
(87) Internationale Veröffentlichungsnummer: WO 2012/123081

(56) Entgegenhaltungen:
- WO-A-2005/073563
- DE-A1- 10 010 077
- DE-A1-102006 014 682
- DE-A1-102006 058 955

## Beschreibung

Die Erfindung betrifft eine Saugeinheit gemäß dem Oberbegriff des Anspruches 1.

Eine solche Saugeinheit ist beispielsweise aus der DE 10 2006 058 955 A1 bekannt. Andere Saugeinheiten sind beispielsweise in der DE 100 10 077 A1, der DE 10 2006 014 682 A1 oder der WO 2005/073 563 A1 beschrieben.

In dentalen und medizinischen Praxen ist es sowohl bei der Diagnose als auch bei der Behandlung oft notwendig, Körperflüssigkeiten abzusaugen, insbesondere Speichel und Blut. Dies erfolgt unter Verwendung von Saugkanülen, die mit dem Eingang einer Saugeinheit über einen flexiblen Schlauch und einen Flüssigkeitsabscheider verbunden sind.

Derartige Saugeinheiten müssen imstande sein, einen verhältnismäßig hohen Unterdruck zu erzeugen, um Flüssigkeit rasch bei kleinen Leitungsquerschnitten absaugen zu können. Kleine Leitungsquerschnitte sind im Hinblick auf ein räumlich gezieltes Absaugen und leichte Beweglichkeit der Kanülen und Schläuche notwendig.

Die bisher üblichen Saugmaschinen sind in der Regel Seitenkanalmaschinen. Es sind dies große und recht viel Lärm erzeugende Maschinen, die in der Regel entfernt vom Arbeitsplatz des Arztes aufgestellt werden. Dies beinhaltet, dass in der Regel bauliche Änderungen am Gebäude vorgenommen werden müssen.

Für viele Anwendungen wäre es vorteilhaft, wenn man die Saugeinheit direkt am Arbeitsplatz unterbringen könnte. Es würden dann die Verbindungen zu einer entfernt aufgestellten Saugeinheit entfallen, und man brauchte auch keinen gesonderten Raum für eine solche Maschine.

Die Seitenkanalmaschinen haben, wie gesagt, in der Regel einen großen Durchmesser. Eine Aufgabe der Erfindung liegt daher darin, eine Saugeinheit anzugeben, welche kleine Abmessungen aufweist und doch den hohen Unterdruck erzeugen, der zum Absaugen von Flüssigkeit mittels verhältnismäßig kleinen Durchmesser aufweisenden Kanülen notwendig ist.

In der Saugeinheit umfaßt die Saugmaschine ein Radial-Förderelement, z.B. ein Kreiselrad, welches kleine Abmessungen im Bereich von 3 bis 8 oder bis 15 cm aufweist. Ein derartiges radiales Förderelement wäre bei den üblichen Drehzahlen von Elektromotoren (bei 3000 U/min) nicht ausreichend, den gewünschten Saugdruck zu erzeugen. Daher wird diese Saugmaschine durch einen hochdrehenden, vorzugsweise elektrisch kommutierten Motor (EC-Motor) angetrieben, der mit deutlich höherer Drehzahl als Netzfrequenz (mehr als 20 000 U/ min) umläuft. Hierzu hat der EC-Motor eine Betriebsschaltung, die aus der Netzspannung einen hochfrequenten Speisestrom für den EC-Motor erzeugt, wobei gegebenenfalls auch die Frequenz vom Benutzer einstellbar sein kann.

Durch die höhere Drehzahl des EC-Motors wird somit der Nachteil, der aus der kleinen radialen Abmessung des Radial-Förderelements resultiert überkompensiert, so dass man insgesamt einen ausreichenden Unterdruck erhält.Durch die Schallisolierung wird erreicht, dass von der Saugmaschine erzeugter Schall nicht an die Umgebung abgegeben wird.

Unter "schallisolierend" soll hier jedes Material verstanden werden, welches Schall absorbiert oder den Durchgang von Schall herabsetzt.

Die Erfindung gestattet es, mit einfachen und kostengünstigen Mitteln eine gute Schallisolierung zu erzielen. Darüber hinaus kann man das zum Isolieren verwendete Material auch erst am Einsatzort in die Saugmaschine bzw. den Elektromotor einfüllen, so dass die Saugeinheit bei geringerem Gewicht von der Fabrik zum Anwender transportiert werden kann, insbesondere von einer Person getragen und installiert werden kann.

Mit der Weiterbildung der Erfindung gemäß Anspruch 2 wird der gleiche Vorteil bezüglich Geräuschen erhalten, die vom Elektromotor herrühren.

Die Weiterbildung der Erfindung gemäß Anspruch 3 ist im Hinblick auf gute Schalldämpfung in radialer Richtung vorteilhaft.

Mit der Weiterbildung der Erfindung gemäß Anspruch 4 wird auch eine gute Schallisolierung in axialer Richtung erhalten.

Das schallisolierende Material muß in der Regel durch eine harte Wand gegen mechanische Beschädigungen geschützt werden, bzw. zusammengehalten werden (Flüssigkeit).

Mit der Weiterbildung der Erfindung gemäß Anspruch 5 wird erreicht, dass Begrenzungswände, die schon zum Schützen und Zusammenhalten des schallisolierenden Materials benötigt werden, auch selbst zur weiteren Schallisolierung beitragen.

Gemäß Anspruch 6 sind als Material für Isoliermaterial begrenzende Wände insbesondere Kunststoffe vorteilhaft. Diese haben den weiteren Vorteil, dass das Gehäuse von Saugmaschine und/oder Elektromotors durch Spritzen eines Kunststoffmaterial erzeugt werden kann, so dass alle Einzelheiten des Gehäuses beim Spritzen mitentstehen, mechanische Nachbearbeitungen des Gehäuses somit entfallen.

Dabei hat es sich insbesondere bewährt, dem Kunststoffmaterial einen in Partikelform vorliegenden Füllstoff zuzusetzen. Ein solcher Füllstoff behindert das Spritzen nicht, erhöht aber die Schallabsorption. Als in Partikelform vorliegendes Füllstoffmaterial hat sich insbesondere Talkum bewährt.

Mit der Weiterbildung der Erfindung gemäß Anspruch 7, werden durch Begrenzungswände vorgegebene Kammern, in welchen sich das schallisolierende Material befindet, zugleich Strömungswege gebildet, durch welche ein Kühlmittelstrom bewegt werden kann. Ein derartiger Kühlmittelstrom trägt im Elektromotor und in der Saugmaschine entstehende Wärme durch Konvektion weg. Saugmaschine und/oder Elektromotor sind somit nicht oder nur weniger darauf angewiesen, Wärme über ihre Oberfläche abzugeben. Dies ermöglicht es, die Saugmaschine und den Elektromotor mit einem zusätzlichen schallabsorbierenden Material zu umgeben, welches nicht gut wärmeleitend zu sein braucht.

Die Weiterbildung der Erfindung gemäß Anspruch 8 hat den Vorteil, dass man für das Erzeugen des Kühlmittels keine zusätzlichen apparativen Voraussetzungen schaffen muß, da kühles Wasser aus der öffentlichen Wasserversorgung zur Verfügung steht, z.B. seitens einer sowieso am Arbeitsplatz vorgesehenen Einrichtung zum Abgeben von Spülwasser für eine Saugleitung. Dieses Spülwasser kann dann vor dem Einsatz zum Spülen zum Kühlen der Saugeinheit verwendet werden und so einen doppelten Nutzen erbringen.

Mit der Weiterbildung der Erfindung gemäß Anspruch 9 wird erreicht, dass das zu Kühlzwecken durch den Elektromotor und/oder die Saugmaschine fließende Wasser zu einem weiteren Zweck verwendet werden kann, nämlich zum Spülen eines Abschnittes oder Teiles des Arbeitsplatzes, An diesem ist es typischerweise üblich, durch einen Frischwasserstrom ein Sichfestsetzen von Speichel und Blut in den Saugleitungen zu vermeiden.

Mit der Weiterbildung der Erfindung gemäß Anspruch 10 wird erreicht, dass der Kühlmittelstrom auf jeden Fall dann fließt, wenn mit der Saugmaschine gearbeitet wird. Auch wenn er nur zu Spülzwecken eingeschaltet wird, erhält man eine Kühlung der Saugeinheit, die im Ergebnis dann bei späterem Wiedereinschalten derselben Betriebswärme kompensieren kann.

Die Weiterbildung der Erfindung gemäß Anspruch 11 erlaubt die Verwendung von Saugmaschinen mit besonders kleinem Durchmesser. So kann eine Saugmaschine, die den für das Arbeiten eines Zahnarztes notwendigen Unterdruck erbringt, mit einem Durchmesser von nur etwa 50 mm realisiert werden, wenn die Radialräder von zwei Saugstufen mit einer Drehzahl von 45 000 U/min umlaufen.

Die Weiterbildung der Erfindung gemäß Anspruch 12 ist im Hinblick auf eine einfache, durchgehende und im wesentlichen glatte Außenkontur der Saugeinheit von Vorteil.

Den gleichen Vorteil erhält man bei einer Saugeinheit, bei welcher Saugmaschine und Elektromotor von einer zusätzlichen Isolierung umgeben sind, gemäß Anspruch 13.

Die Weiterbildung der Erfindung gemäß Anspruch 14 ist im Hinblick darauf von Vorteil, in Umfangsrichtung konstante gute Schallisolierung zu haben.

Mit der Weiterbildung der Erfindung gemäß Anspruch 15 wird erreicht, dass man zumindest einen Teil der Schallisolierung für Saugmaschine und/oder Elektromotor durch ein Materialstück realisieren kann, welches keiner festen äußeren Begrenzungswand bedarf, da es formstabil ist.

Nachstehend wird die Erfindung anhand eines Ausführungsbeispiels unter Bezugnahme auf die Zeichnung näher erläutert. In dieser zeigen:
- Fig. 1:: Eine schematische Darstellung eines zahnärztlichen Arbeitsplatzes mit integrierter Saugeinheit;
- Fig. 2:: eine perspektivische Ansicht der mechanischen Teile der in Fig. 1 gezeigten Saugeinheit;
- Fig. 3:: eine seitliche Anufsicht auf die Auslassseite der in Fig. 2 gezeigten Saugeinheit;
- Fig. 4:: einen axialen Schnitt durch die Saugeinheit nach Fig. 2, dort von links gesehen;
- Fig. 5:: einen transversalen Schnitt durch die Saug- nheit einheit nach Fig. 4 längs der dortigen Schnittlinie V-V; und

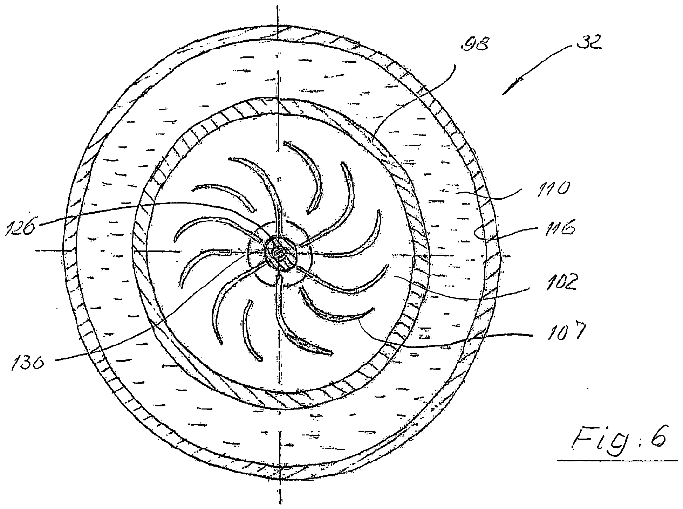

- Fig. 6:: einen transversalen Schnitt durch die in Fig., 4 gezeigte Saugeinheit längs der dortigen Schnittlinie VI-VI.

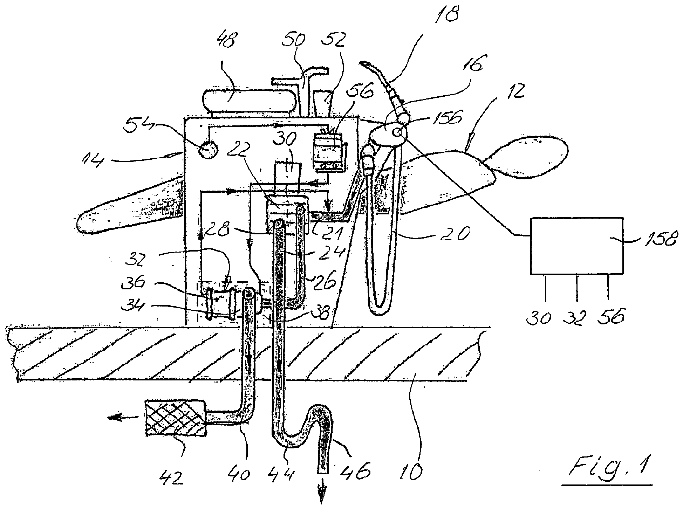

In Fig. 1 ist mit 10 ein Boden eines Praxisraumes bezeichnet. Auf diesem steht ein Behandlungsstuhl 12, der in üblicher Weise höhenverstellbar und in der Neigung eines Fußteiles und eines Lehnenteiles sowie einer Kopfstütze einstellbar ist, wie an sich bekannt.

Der Behandlungsstuhl 12 steht neben einer Service-Einheit 14, die eine zahnärztliche Schlauchblage 16 aufweist. Auf dieser abgelegt ist eine Saugkanüle 18 gezeigt, welche über einen flexiblen Schlauch 20 und eine Leitung 21 mit einem Abscheider 22 verbunden ist.

Der Abscheider 22 zerlegt das ankommende Gemisch aus Luft, Flüssigkeit und Feststoffpartikeln in flüssige Anteile, welche durch eine Leitung 24 abgeführt werden, in gasförmige Anteile, welche über eine Leitung 26 abgeführt werden, und feste Partikel, die in einem Sammelbehälter 28 zurückgehalten werden. Typischerweise weist ein derartiger Abscheider 22 eine nicht dargestellte innenliegende Zentrifugentrommel auf, welche durch einen Antriebsmotor 30 gedreht wird.

Die Leitung 26 ist mit dem Einlass einer Saugeinheit 32 verbunden. Diese umfaßt eine Saugmaschine 34 und einen hierzu koaxialen Elektromotor 36, und die durch Saugmaschine und Elektromotor gebildete Einheit befindet sich in einem schallisolierenden Außengehäuse 38.

Der Elektromotor 36 ist hochdrehend, z.B. ein elektrisch kommutierter Elektrommotor, z.B. ein Synchronmotor mit Permanentmagnet-Rotor und einem Stator, der ein hochfrequentes Drehfeld erzeugt. Hochfrequent soll hier bedeuten, dass die Umlauffrequenz des Feldes mehr als 20 000/min, vorzugsweise mehr als 30 000/min, nochmals vorzugsweise etwa 45 000/min bis etwa 70 000/min beträgt.

Ein Auslass der Saugeinheit 32 ist über eine Leitung 40 mit einem Abluftfilter 42 verbunden, über welches die geförderte Luft an die Umgebung abgegeben wird.

Die die flüssigen Bestandteile des abgesaugten Gemisches führende Leitung 24 ist über einen Siphon 44 mit einer ins öffentliche Abwassernetz führenden Abwasserleitung 46 verbunden.

Die Service-Einheit 40 umfaßt ferner ein Speibecken 48, einen Frischwasserspender 50 zum Spülen des Speibeckens 48 und zum Füllen eines Bechers 52 sowie einen Frischwasseranschluß 54, der über eine elektrisch steuerbare Dosiereinheit 56 mit einem Kühlmitteleinlass der Saugeinheit 32 verbunden ist.

Ein Auslass der Saugeinheit 32 ist zu der Leitung 21 zurückgeführt.

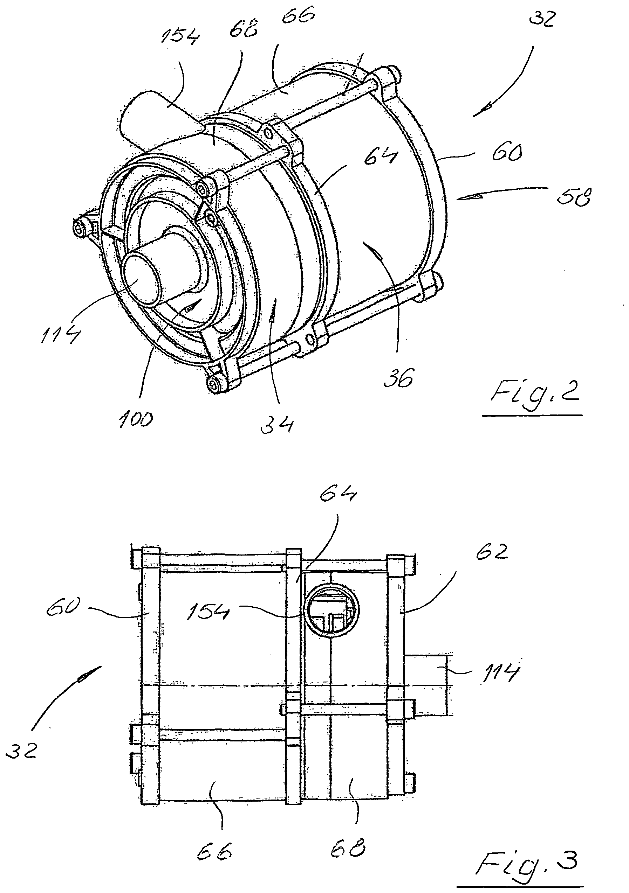

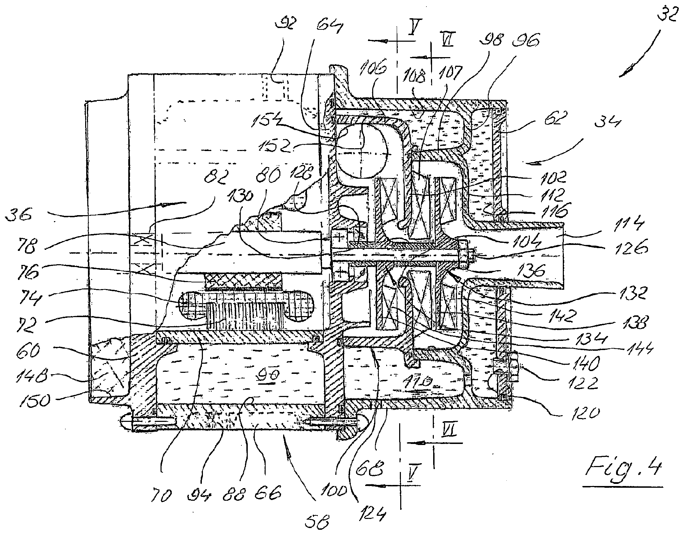

Wie aus den Fig. 2 bis 4 ersichtlich, umfaßt die Saugeinheit 32 ein insgesamt mit 58 bezeichnetes Kühlmittelgehäuse, welches eine in Fig. 4 links gelegene Endplatte 60, eine in Fig. 4 rechts gelegene Endplatte 62, eine mittlere Trennplatte 64 und zwei äußere im wesentlichen zylinderförmige Kammerwände 66, 68.

Zwischen die linke Endplatte 60 und die Trennplatte 64 ist ein Motorgehäuse 70 eingesetzt, dessen Innenseite ein Lamellenpaket 72 trägt, auf welchem eine Statorwicklung 74 angeordnet ist.

Das Motorgehäuse 70 ist aus gut wärmeleitendem Metall gefertigt, wo in erster Linie auf gute Wärmeableitung und hohe mechanische Stabilität Wert gelegt wird. Wenn die Wandstärke des Motorgehäuses bei geringer mechanischer Belastung auch dünner gewählt werden kann, kommt auch ein Kunststoffspritzteil in Betracht, insbesondere aus einem Kunststoff mit Metallpartikel-Füllstoff.

Die Statorwicklung 74 ist im wesentlichen hülsenförmig, und in ihrem Inneren ist ein Rotor 76 angeordnet, welcher von einer Welle 78 getragen wird. Bei dem Rotor 76 handelt es sich um einen Permanentmagnet-Rotor, wie bei Synchronmotoren üblich.

Die Welle 78 ist in einem ersten Lager 80 gelagert, welches von der Trennplatte 64 getragen ist, und in einem weiteren Lager 82 gelagert, welches von der linken Endplatte 60 getragen ist.

Die Endplatte 60, die Trennplatte 64, die Kammerwand 66 und das Motorgehäuse 70 begrenzen so einen Kühlmittelraum 88, der das Motorgehäuse 70 umgibt. In dem Kühlmittelraum 88 befindet sich ein Wasservolumen 90, und der Kühlmittelraum 88 hat einen Einlass 92, über den kühles Frischwasser zugeführt werden kann, und einen Auslass 94, über den erwärmtes Kühlmittel abgegeben wird.

Die Kammerwand 68 hat in ihrem in Fig. 4 rechts gelegenen Abschnitt einen angeformten radial nach innen verlaufenden Flanschabschnitt 96. An diesen schließt sich axial wieder zurückspringend ein hülsenförmiger Wandabschnitt 98 an. Dessen in Fig. 4 links gelegenes freies Ende stößt dicht an ein Leitteil 100 an, welches im wesentlichen L-förmigen Querschnitt hat. Das Leitteil 100 hat einen Leitflansch 102, der in einer zur Achse der Welle 78 senkrechten Ebene liegt und mit seiner radial innen liegenden Randkante eine Verbindungsöffnung 104 begrenzt. Ein axialer äußerer hülsenförmiger Abschnitt 106 des Leitteiles 100 ist mit der in Fig.4 links gelegenen Begrenzungsfläche der Trennplatte 64 verbunden.

Auf diese Weise begrenzen die Kammerwand 68 und das Leitteil 100 zusammen eine ringförmige Kühlmittelkammer 108. In dieser befindet sich ein Wasservolumen 110.

Von der Übergangsstelle zwischen dem Flanschabschnitt 96 und dem Wandabschnit 98 geht ein weiterer transversaler Wandabschnitt 112 der Kammerwand 68 aus. An dessen inneres Ende ist ein axialer Ansaugstutzen 114 angeformt. Dieser durchsetzt eine mittige Öffnung der Endplatte 62. Auf diese Weise begrenzen die Kammerwand 68 und die Enplatte 62 zusammen eine weitere Kühlmittelkammer 116. Diese steht über mehrere in Umfangsrichtung verteilte Öffnungen mit der Kühlmittelkammer 108 in Strömungsverbindung. Das Wasservolumen 110 erstreckt sich somit auch auf die Kühlmittelkammer 116.

Über eine Beschickungsöffnung 120 der Endplatte 62, die durch eine Schraube 122 verschlossen ist, kann Wasser in die Kühlmittelkammern 108 und 110 eingebracht werden.

Alternativ kann man die Beschickungsöffnung 12 0 auch mit einer Frischwasserleitung verbinden und beim motornahen, in Fig. 4 links gelegenen Ende der Kühlmittelkammer 108 einen gestrichelt angedeuteten Kühlmitte.-auslass 124 vorsehen. Der Einlass 92 wird dann mit der Beschickungsöffnung 12 0 zusammengeschaltet, der Kühlmittelauslass 124 mit dem Auslass 94.

Die beschriebene Konstruktion ermöglicht es auch, die beiden Kühlmittelkammern mit unterschiedlichen oder gleichen Flüssigkeiten zu füllen, und so unterschiedlichen Anforderungen an Kühlleistung und Schallisolierung Rechnung zu tragen. Insbesondere kann man die Kühlmittelkammer 108 mit einem Öl füllen, das den Schall gut dämpft.

Die Welle 78 hat einen freitragenden, geringeren Durchmesser aufweisenden Wellenabschnitt 126, auf welchem unter Verwendung von Distanzhülsen 12 8, 13 0 zwei Kreiselräder 132, 134 aufgesetzt sind. Das in Fig. 4 rechts gelegene Ende des Wellenabschnittes 126 ist mit einem Gewinde versehen, auf welchem eine Mutter 136 läuft. Auf diese Weise sind die beiden Kreiselräder 132, 134 axial mit der Welle 78 verspannt und werden durch diese in Drehrichtung mitgenommen.

Die Kreiselräder 132, 134 haben jeweils einen Scheibenabschnitt 138 bzw. 140, auf welchem sich Förderflügel 142 bzw. 144 befinden.

Der transversale Leitflansch 102 trägt auf seiner im Fig. 4 rechts gelegenen Seite Beruhigungsflügel 107, welche den Drall in der Luft brechen, der vom Kreiselrad 132 erzeugt wird.

Auf diese Weise bilden die beiden Kreiselräder 132, 134 eine zweistufige Radialmaschine, die beim hier betrachteten Ausführungsbeispiel als Saugmaschine arbeitet.

Die Endplatten 62, 64 und die Kammerwände 66, 68 sind aus einem Kunststoffmaterial gespritzt, welches einen partikelförmigen Füllstoff enthält, bevorzugt Talkumpulver.

Auf diese Weise hat man in Richtung von den umlaufenden Elementen der Saugeinheit weg eine doppelte Schallisolierung, die erste durch Wasservolumina, die zweite durch gut schallisolierende bzw. schallabsorbierende Begrenzungswände des Kühlmittelgehäuses.

Beim in Fig. 4 gezeigten Ausführungsbeispiel erfolgt die Schallisolierung beim linken Ende des Elektromotors nicht durch ein scheibenförmiges Flüssigkeitsvolumen, sondern durch ein scheibenförmiges Isolierelement 14 8 aus schallabsorbierendem Material (z.B. einem Schaumstoff), welches in eine ringförmige Aufnahmerippe 150 eingesetzt ist, welches an die linke Begrenzungsfläche der Endplatte 60 angeformt ist.

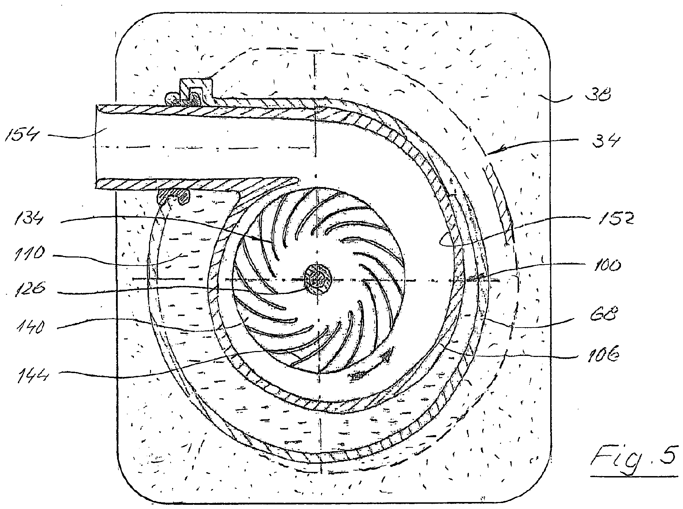

Wie aus Fig. 5 ersichtlich, hat der Wandabschnitt des Leitteiles 100 in axialer Sicht spiralförmige Gestalt. Auf diese Weise läuft das Kreiselrad 134 in einem Auslassraum 152 um, welcher sich in Drehrichtung erweitert. Der Auslassraum 152 steht in seinem breitesten Abschnitt mit einem Auslassstutzen 154 in Verbindung, an welchen die Leitung 40 (Fig. 1) angeschlossen ist.

In Fig. 5 ist auch das Außengehäuse 38 der Saugeinheit 32 wiedergegeben. Das Außengehäuse 38 kann aus zwei spiegelbildlichen Gehäusehälften bestehen, welche von zwei Seiten auf die Saugeinheit 32 aufgeschoben sind. Vorzugsweise sitzen die beiden Gehäusehälften formschlüssig auf der Außenseite der Saugeinheit 32.

Beim Ausführungsbeispiel nach Fig. 5 ist durch gestrichelte Linien angedeutet, dass man die Kühlmittelkammer 108 auch so ausgestalten kann, dass sie in Umfangsrichtung gleichbleibende Dicke hat. Beim Ausführungsbeispiel nach Fig. 5 war die Geometrie der Kammerwand 68 so gewählt, dass sie koaxial zur Achse der Welle 78 ist.

Mit der in Fig. 5 gestrichelt eingezeichneten Varianten wird eine gleichförmigere Kühlung der Saugmaschine 34 erhalten.

In der Zeichnung sind bei verschiedenen Stoßstellen zwischen Gehäuseteilen Dichtringe gezeigt, deren Funktion aus der Zeichnung ohne weiteres ersichtlich ist und die somit hier nicht nochmals detailliert beschrieben zu werden braucht. Auch die mechanische Verbindung der verschiedenen Gehäuseteile ist aus der Zeichnung, insbesondere den Fig. 2 und 4, ersichtlich.

Die oben beschriebene Saugeinheit arbeitet folgendermaßen:
In die Schlauchablage 16 ist ein Sensor 156 integriert, der mit der Saugkanüle 18 zusammenarbeitet und dann ein Ausgangssignal erzeugt, wenn die Saugkanüle 18 von der Schlauchablage 16 abgenommen ist.

Das Ausgangssignal des Sensors 156 wird auf eine Steuereinheit 158 gegeben, welche das Arbeiten des Abscheiders 22, der Saugeinheit 32 und der Dosiereinheit 56 steuert.

Grob gesprochen arbeitet die Steuereinheit 158 so, dass sie nach Erhalt eines Signals vom Sensor 156 zunächst den Abschalter 30, dann nach kurzer Verzögerung die Saugeinheit 32 und zuletzt die Dosiereinheit 56 aktiviert. Auf diese Weise ist dann sichergestellt, dass der Zahnarzt erst dann Gemisch aus dem Mund des Patienten absaugen kann, wenn der Abscheider 30 schon seinen Arbeitszustand voll erreicht hat.

Wird die Kanüle 18 auf die Schlauchablage 16 zurückgelegt, so endet das Ausgangssignal des Sensors 156 und die Steuereinheit 158 schaltet nun zuerst die Saugeinheit 32, dann die Dosiereinheit 56 und zuletzt den Abscheider 22 ab.

In Abwandlung des oben beschriebenen Ausführungsbeispiels kann man auch eine Saugmaschine 34 vorsehen, die mehr als zwei Saugstufen umfaßt. Dies läßt sich einfach durch Hinzufügen einer weiteren Saugstufe unter Zwischenschaltung eines weiteren Leitteiles 100 bewerkstelligen.

Wo der Durchmesser der Saugeinheit 32 weniger kritisch ist, kann man auch eine Saugstufe einsparen, wenn man den Durchmesser des dann einzigen Kreiselrades erhöht, gegebenenfalls auch die Drehzahl, mit der der Elektromotor 30 betrieben wird, weiter heraufsetzt.

In weiterer Abwandlung des oben beschriebenen Ausführungsbeispiels kann man in der Saugeinheit 32, insbesondere bei deren Elektromotor 36 einen Temperatursensor vorsehen, der mit einem weiteren Signaleingang der Steuereinheit 158 verbunden ist. In diesem Fall kann dann die Dosiereinheit 56 von der Steuereinheit 158 nur dann betätigt werden, wenn ein unzulässiger Temperaturanstieg im Inneren der Saugeinheit 32 beobachtet wird.

Obenstehend wurde die Erfindung anhand einer Saugeinheit beschieben. Es versteht sich, dass das erfindungsgemäße Kühlkonzept auch bei einem entsprechend aufgebauten Verdichter angewendet werden kann, da sich ein solcher strukturell nicht von einer Saugmaschine unterscheidet; nur die Verbindung mit Atmosphäre und Nutzlast sind vertauscht: Bei der Saugmaschine befindet sich der Auslass auf Atmosphärendruck, der Einlass stellt Unterdruck bereit. Beim Verdichter befindet sich der Einlass auf Atmosphärendruck und der Auslass stellt Überdruck bereit.

## Patentansprüche

1. Saugeinheit, insbesondere für medizinische und dentale Zwecke, mit einer Saugmaschine (34) und einem diese antreibenden Elektromotor (36), wobei die Saugmaschine (34) ein Radial-Förderelement (132, 134) aufweist und der Elektromotor (36) ein hochdrehender Motor, insbesondere ein elektrisch kommutierter Elektromotor ist, und die Saugmaschine (32) eine Schallisolierung (110, 68, 38) umfaßt, welche einen Arbeitsraum umgibt, in welchem ein Radial-Förderelement (132, 134) angeordnet ist,
**dadurch gekennzeichnet, dass**
die Schallisolierung ein Flüssigkeitsvolumen (110; 90) umfaßt.

2. Saugeinheit nach Anspruch 1, **dadurch gekennzeichnet, dass** der Elektromotor (36) eine Schallisolierung (90, 66, 38) umfaßt, welche den Rotor (76) und vorzugsweise auch den Stator (72, 74) des Elektromotors (36) umgibt.

3. Saugeinheit nach einem der Ansprüche 1 oder 2, **dadurch gekennzeichnet, dass** die Schallisolierung einen hülsenförmigen, vorzugsweise zylindrischen Isolierungsabschnitt (110; 90; 38) umfaßt.

4. Saugeinheit nach einem der Ansprüche 1 bis 3, **dadurch gekennzeichnet, dass** die Schallisolierung einen scheibenförmigen Abschnitt (110, 62, 38; 60, 148, 38) umfaßt.

5. Saugeinheit nach einem der Ansprüche 1 bis 4, **dadurch gekennzeichnet, dass** die Schallisolierung mindestens eine äußere Begrenzungswand (66; 68) umfaßt, welche aus einem schallisolierenden Material gefertigt ist.

6. Saugeinheit nach Anspruch 5, **dadurch gekennzeichnet, dass** das schallisolierende Material ein Kunststoffmaterial umfaßt, insbesondere ein partikelförmigen Füllstoff enthaltendes Kunststoffmaterial.

7. Saugeinheit nach einem der Ansprüche 1 oder 2, **dadurch gekennzeichnet, dass** mindestens ein Teil der Schallisolierung (110; 90) in einer stromungsmitteldichten Kammer (116; 88) angeordnet ist, durch welche ein Kühlmittelstrom bewegbar ist.

8. Saugeinheit nach Anspruch 7, **dadurch gekennzeichnet, dass** das Kühlmittel Wasser umfaßt.

9. Saugeinheit nach Anspruch 8, **dadurch gekennzeichnet, dass** ein Auslass (84) der stromungsmitteldichten Kammer (88) mit einem zu spülenden Abschnitt (21) eines Arbeitsplatzes verbunden ist.

10. Saugeinheit nach einem der Ansprüche 7 bis 9, **gekennzeichnet durch** eine den Kühlmittelstrom steuernde Dosiereinrichtung (56), welche in Abhängigkeit vom Arbeitszustand des Elektromotors und/oder einer Ablage (16) für eine Saugkanüle (18) gesteuert wird.

11. Saugeinheit nach einem der Ansprüche 1 bis 10, **dadurch gekennzeichnet, dass** der elektrisch kommutierte Elektromotor (36) mit einer Drehzahl von mehr als 20000 U/min, vorzugsweise mehr als 30 000 U/min, vorzugsweise etwa 45 000 bis etwa 70 000 U/min umläuft.

12. Saugeinheit nach einem der Ansprüche 1 bis 11, **dadurch gekennzeichnet, dass** die Saugmaschine (34) und der Elektromotor (36) in etwa gleich große radiale Abmessung aufweisen.

13. Saugeinheit nach einem der Ansprüche 1 bis 12, **dadurch gekennzeichnet, dass** die Saugmaschine (34) und ihre Schallisolierung einerseits und der Elektromotor (36) und seine Schallisolierung andererseits im wesentlichen gleiche radiale Abmessung abweisen.

14. Saugeinheit nach einem der Ansprüche 1 bis 13, bei welchem die Saugmaschine (34) einen sich erweiternden Auslasskanal (152) aufweist, **dadurch gekennzeichnet, dass** die Schallisolierung der Saugmaschine (34) in Umfangsrichtung im wesentlichen gleichbleibende Dicke hat.

15. Saugeinheit nach einem der Ansprüche 1 bis 14, **dadurch gekennzeichnet, dass** ein Teil der Schallisolierung durch ein festes Isolierstück (148) gebildet ist.

## Claims

1. Suction unit, in particular for medical and dental purposes, with a suction machine (34) and with an electric motor (36) driving the latter, wherein the suction machine (34) has a radial impeller element (132, 134), and the electric motor (36) is a highspeed motor, in particular an electrically commutated electric motor, and the suction machine (32) comprises sound insulation (110, 68, 38) which surrounds a work chamber in which a radial impeller element (132, 134) is arranged, **characterized in that** the sound insulation comprises a liquid volume (110; 90).

2. Suction unit according to Claim 1, **characterized in that** the electric motor (36) comprises sound insulation (90, 66, 38) which surrounds the rotor (76) and preferably also the stator (72, 74) of the electric motor (36).

3. Suction unit according to either of Claims 1 and 2, **characterized in that** the sound insulation comprises a sleeve-shaped, preferably cylindrical insulation portion (110; 90; 38).

4. Suction unit according to one of Claims 1 to 3, **characterized in that** the sound insulation comprises a disc-shaped portion (110, 62, 38; 60, 148, 38).

5. Suction unit according to one of Claims 1 to 4, **characterized in that** the sound insulation comprises at least one outer boundary wall (66; 68), which is produced from a sound-insulating material.

6. Suction unit according to Claim 5, **characterized in that** the sound-insulating material comprises a plastics material, in particular a plastics material that contains particulate filler.

7. Suction unit according to either of Claims 1 and 2, **characterized in that** at least one part of the sound insulation (110; 90) is arranged in a chamber (116; 88) which is leaktight to flow medium and through which a flow of coolant is movable.

8. Suction unit according to Claim 7, **characterized in that** the coolant comprises water.

9. Suction unit according to Claim 8, **characterized in that** an outlet (84) of the chamber (88) leaktight to flow medium is connected to a portion (21) of a work station that is to be rinsed.

10. Suction unit according to one of Claims 7 to 9, **characterized by** a dosing device (56) which controls the flow of coolant and which is controlled according to the operating state of the electric motor and/or a holder (16) for a suction cannula (18) .

11. Suction unit according to one of Claims 1 to 10, **characterized in that** the electrically commutated electric motor (36) revolves at a speed of more than 20,000 rpm, preferably more than 30,000 rpm, preferably approximately 45,000 to approximately 70,000 rpm.

12. Suction unit according to one of Claims 1 to 11, **characterized in that** the suction machine (34) and the electric motor (36) have approximately the same radial dimension.

13. Suction unit according to one of Claims 1 to 12, **characterized in that** the suction machine (34) and its sound insulation, on the one hand, and the electric motor (36) and its sound insulation, on the other hand, have substantially the same radial dimension.

14. Suction unit according to one of Claims 1 to 13, in which the suction machine (34) has a widening outlet channel (152), **characterized in that** the sound insulation of the suction machine (34) has substantially uniform thickness in the circumferential direction.

15. Suction unit according to one of Claims 1 to 14, **characterized in that** a part of the sound insulation is formed by a solid insulation piece (148).

## Revendications

1. Unité d'aspiration à finalités notamment médicales et dentaires, comprenant une machine d'aspiration (34) et un moteur électrique (36) entraînant cette dernière, ladite machine d'aspiration (34) comportant un élément (132, 134) de refoulement radial, et ledit moteur électrique (36) étant un moteur à vitesse de rotation élevée, en particulier un moteur électrique commuté électriquement, ladite machine d'aspiration (32) étant pourvue d'une isolation phonique (110, 68, 38) entourant un espace de travail dans lequel est logé un élément (132, 134) de refoulement radial,
**caractérisée par le fait que**
l'isolation phonique inclut un volume de liquide (110 ; 90).

2. Unité d'aspiration selon la revendication 1, **caractérisée par le fait que** le moteur électrique (36) est muni d'une isolation phonique (90, 66, 38) entourant le rotor (76) et, de préférence également, le stator (72, 74) dudit moteur électrique (36).

3. Unité d'aspiration selon l'une des revendications 1 ou 2, **caractérisée par le fait que** l'isolation phonique inclut une zone d'isolation (110 ; 90 ; 38) en forme de douille, préférentiellement cylindrique.

4. Unité d'aspiration selon l'une des revendications 1 à 3, **caractérisée par le fait que** l'isolation phonique inclut une zone discoïdale (110, 62, 38 ; 60, 148, 38).

5. Unité d'aspiration selon l'une des revendications 1 à 4, **caractérisée par le fait que** l'isolation phonique inclut au moins une paroi extérieure de délimitation (66 ; 68) constituée d'un matériau acoustiquement isolant.

6. Unité d'aspiration selon la revendication 5, **caractérisée par le fait que** le matériau acoustiquement isolant inclut une matière plastique, notamment une matière plastique renfermant une substance de charge particulaire.

7. Unité d'aspiration selon l'une des revendications 1 ou 2, **caractérisée par le fait qu'**au moins une partie de l'isolation phonique (110 ; 90) est disposée dans une chambre (116 ; 88) étanche à des fluides en circulation, à travers laquelle un flux d'agent de refroidissement peut être mis en mouvement.

8. Unité d'aspiration selon la revendication 7, **caractérisée par le fait que** l'agent de refroidissement inclut de l'eau.

9. Unité d'aspiration selon la revendication 8, **caractérisée par le fait qu'**une sortie (84) de la chambre (88) étanche à des fluides en circulation est raccordée à une zone (21) d'un poste de travail, devant être rincée.

10. Unité d'aspiration selon l'une des revendications 7 à 9, **caractérisée par** un dispositif de dosage (56) qui pilote le flux d'agent de refroidissement, et est commandé en fonction de l'état opérationnel du moteur électrique et/ou d'un reposoir (16) affecté à une canule d'aspiration (18).

11. Unité d'aspiration selon l'une des revendications 1 à 10, **caractérisée par le fait que** le moteur électrique (36), commuté électriquement, tourne à une vitesse angulaire supérieure à 20 000 tr/min, excédant de préférence 30 000 tr/min et mesurant, de préférence, d'environ 45 000 tr/min à environ 70 000 tr/min.

12. Unité d'aspiration selon l'une des revendications 1 à 11, **caractérisée par le fait que** la machine d'aspiration (34) et le moteur électrique (36) présentent, sensiblement, le même dimensionnement radial.

13. Unité d'aspiration selon l'une des revendications 1 à 12, **caractérisée par le fait que** la machine d'aspiration (34) et son isolation phonique, d'une part, et le moteur électrique (36) et son isolation phonique, d'autre part, présentent des dimensionnements radiaux substantiellement identiques.

14. Unité d'aspiration selon l'une des revendications 1 à 13, dans laquelle la machine d'aspiration (34) est dotée d'un canal de sortie (152) s'évasant, **caractérisée par le fait que** l'isolation phonique de ladite machine d'aspiration (34) présente une épaisseur substantiellement constante dans la direction périphérique.

15. Unité d'aspiration selon l'une des revendications 1 à 14, **caractérisée par le fait qu'**une partie de l'isolation phonique est constituée d'une pièce isolante (148) solide.
